# FASCICULE DE BREVET EUROPEEN

(11) **EP 3 794 327 B1**
(45) Date de publication et mention de la délivrance du brevet: **25.05.2022**
(21) Numéro de dépôt: 19706465.2
(22) Date de dépôt: 14.02.2019
(51) Int. Cl.: G01L 1/14, G01R 27/26, G05B 9/03

(54) **DISPOSITIF DE DETECTION CAPACITIVE REDONDANTE PARALLELE**
PARALLELE REDUNDANTE KAPAZITIVE SENSORVORRICHTUNG
PARALLEL REDUNDANT CAPACITIVE SENSING DEVICE

(30) Priorité: 15.05.2018 FR 1854038
(43) Date de publication de la demande: 24.03.2021
(73) Titulaire: Fogale Nanotech, 30900 Nimes (FR)
(72) Inventeur: NEEL, Christian, 30900 Nîmes (FR); ROZIERE, Didier, 30900 Nîmes (FR)
(74) Mandataire: IPAZ
(86) Numéro de dépôt international: PCT/EP2019/053694
(87) Numéro de publication internationale: WO 2019/219248

(56) Documents cités:
- CN-U- 206 209 764
- DE-A1-102011 114 502
- FR-A1- 2 971 867
- US-A1- 2016 117 034
- US-B2- 9 513 321

## Description

### Domaine technique

La présente invention concerne un dispositif détection capacitive redondante d'un objet. Elle concerne également une couche de détection munie d'un tel dispositif de détection et un équipement muni d'un tel dispositif ou d'une telle couche.

Le domaine de l'invention est, de manière non limitative, celui des interfaces de détection capacitive d'objets pour détecter les objets dans un environnement ou en contact avec une surface de détection.

### Etat de la technique

On connait une première technique de détection capacitive basée sur la capacité mutuelle formée entre deux électrodes de mesure. On connait aussi une deuxième technique de détection capacitive basée sur la capacité formée entre l'objet à détecter et une électrode de mesure. L'invention concerne cette deuxième technique de détection capacitive.

De manière générale, les dispositifs de détection capacitive peuvent être utilisés dans des domaines présentant des risques accrues ou critiques. C'est, par exemple, le cas des domaines où un opérateur côtoie un robot. Il est essentiel de s'assurer que le robot ne vient pas percuter l'opérateur, du fait d'un dysfonctionnement du dispositif de détection capacitive équipant le robot.

Cette exigence peut être satisfaite en prévoyant une détection capacitive redondante dans le dispositif de détection équipant le robot, tel que prévu dans le document US 9 513 321. Ce dernier prévoit d'utiliser, pour chaque emplacement/pixel de détection, deux paires d'électrodes, chaque paire d'électrodes réalisant une mesure indépendante de l'autre paire d'électrodes. Ainsi, lorsqu'une paire d'électrode subit un dysfonctionnement la détection est tout de même assurée par la paire restante.

Cependant, la solution décrite dans ce document est coûteuse et encombrante, car elle nécessite l'utilisation d'un nombre important d'électrodes. De plus, la solution proposée dans ce document est sensible aux perturbations mutuelles entre les paires d'électrodes et nécessite des moyens d'isolation des paires d'électrodes, ou une utilisation des paires d'électrodes à tour de rôle.

Un but de la présente invention est de remédier aux inconvénients précités.

Un autre but de la présente invention est de proposer un dispositif de détection capacitive redondante plus simple, moins coûteuse et moins encombrante.

Un autre but de la présente invention est de proposer un dispositif de détection capacitive redondante avec une sensibilité élevée permettant des détections d'objets à plus grande distance.

Encore un autre but de la présente invention est de proposer un dispositif détection capacitive pouvant réaliser, pour chaque emplacement de détection, des détections redondantes simultanées.

### Exposé de l'invention

Au moins un de ces buts est atteint avec un dispositif de détection capacitive d'un objet comprenant un ensemble d'électrodes de détection capacitives, chacune réalisant une détection capacitive pour un emplacement de détection d'une surface de détection, chaque électrode de détection comprenant au moins une première et une deuxième électrodes, dites de mesure, indépendantes, ledit dispositif comprenant
- une première électronique de détection pour les premières électrodes de mesure dudit ensemble, formant avec lesdites premières électrodes de mesure une première voie de détection, pour polariser lesdites premières électrodes de mesure à un potentiel alternatif, dit d'excitation, différent d'un potentiel de masse, et mesurer un signal relatif à une capacité, dite électrode-objet, entre chaque première électrode de mesure et ledit objet, et
- une deuxième électronique de détection pour les deuxièmes électrodes de mesure dudit ensemble, formant avec lesdites deuxièmes électrodes de mesure une deuxième voie de détection, pour polariser lesdites deuxièmes électrodes de mesure audit potentiel d'excitation et mesurer un signal relatif à une capacité électrode-objet entre chaque deuxième électrode de mesure et ledit objet.

Les signaux relatifs à une capacité électrode-objet peuvent être, ou comprendre, par exemple, des signaux relatifs à une capacité, ou un inverse de capacité, ou encore une distance ou un contact entre un objet et des électrodes.

Ainsi, le dispositif de détection selon l'invention propose, pour chaque emplacement de détection d'une surface de détection, une détection redondante avec au moins deux voies de détection indépendante l'une de l'autre.

Par ailleurs, pour chaque emplacement de détection d'une surface de détection, chaque détection peut être réalisée avec une unique électrode de mesure, ce qui est plus simple, moins coûteux et moins encombrant comparé aux dispositifs de l'état de la technique, et en particulier à celui décrit dans le document US 9 513 321.

De plus, les électrodes de mesure d'un emplacement de détection sont portées à un même potentiel alternatif de sorte qu'elles sont électriquement invisibles entre-elles et ne se perturbent pas mutuellement. Ainsi, le dispositif selon l'invention présente une architecture plus simple, tout en autorisant des détections redondantes simultanées pour chaque emplacement de détection.

En outre, chaque emplacement de détection est surveillé par au moins deux voies de détection complètement indépendante l'une de l'autre : ainsi la redondance est assurée sur toute la voie de détection dans son ensemble, y compris au niveau de l'électronique de détection, et pas uniquement au niveau de électrodes de mesure.

Ainsi, un objet à proximité d'un emplacement de détection sera détecté d'une manière identique ou sensiblement identique, avec en particulier une même résolution spatiale, par les deux voies de détection.

Dans ces conditions, la résolution spatiale du dispositif de détection est déterminée par la dimension des emplacements de détection ou des électrodes de détection capacitives, et/ou leur espacement (par exemple de centre-àcentre). Cet espacement correspond également pour l'essentiel à l'espacement entre des électrodes de mesures identiques d'électrodes de détection capacitives voisines.

Dans la présente description, pour éviter des lourdeurs rédactionnelles, le terme « potentiel de masse » désigne un potentiel de référence de l'électronique, qui peut être par exemple une masse électrique ou un potentiel de masse. Ce potentiel de masse peut correspondre à un potentiel de terre, ou à un autre potentiel relié ou non au potentiel de terre.

Dans la présente demande, deux potentiels alternatifs sont identiques à une fréquence donnée lorsqu'ils comportent chacun une composante alternative identique à cette fréquence. Ainsi, l'un au moins des deux potentiels identiques à ladite fréquence peut comporter en outre une composante continue, et/ou une composante alternative de fréquence différente de ladite fréquence donnée.

De manière similaire, deux potentiels alternatifs sont différents à la fréquence de travail lorsqu'ils ne comportent pas de composante alternative identique à cette fréquence de travail.

Les première et deuxième électrodes de mesure composant une électrode de détection peuvent être de même forme, ou de forme différente.

Alternativement, les première et deuxième électrodes de mesure composant une électrode de détection peuvent être de même taille, ou de taille différente.

Suivant un mode de réalisation nullement limitatif du dispositif selon l'invention, pour au moins une électrode de détection, les premières et deuxièmes électrodes de mesure peuvent être juxtaposées de manière non imbriquée.

Suivant un mode de réalisation particulièrement avantageux, pour au moins une électrode de détection :
- l'une des premières et deuxièmes électrodes de mesure peut être au moins partiellement imbriquée dans l'autre desdites électrodes de mesure ; ou
- les première et deuxième électrodes de mesure peuvent être au moins partiellement imbriquées l'une dans l'autre.

Ce mode de réalisation permet de diminuer l'encombrement d'une électrode de détection.

De plus, ce mode de réalisation permet de s'assurer que les électrodes de mesures d'une électrode de détection détectent de manière identique ou sensiblement identique un même objet, en particulier avec une sensibilité et une résolution spatiale identique ou sensiblement identique.

Suivant un exemple de réalisation particulièrement avantageux, pour au moins une électrode de détection les première et deuxième électrodes de mesure peuvent présenter une forme de peigne et être imbriquées l'une dans l'autre.

Suivant un mode de réalisation préféré, le dispositif selon l'invention peut en outre comprendre au moins une électrode de garde pour au moins une première, respectivement deuxième, électrode de mesure, polarisée à un potentiel de garde alternatif, identique ou sensiblement identique au potentiel d'excitation à au moins une fréquence de travail.

Une telle électrode de garde peut être disposée par exemple en regard d'une face d'une ou des électrodes de mesure, ou à proximité de ladite électrode. Elle permet de garder électriquement l'électrode de mesure et ainsi d'augmenter la portée de détection et la précision de détection, en protégeant ladite électrode de mesure des capacités de couplage parasites notamment.

Au moins une électrode de garde peut être commune à toutes les électrodes de mesure formant une électrode de détection, ce qui permet de simplifier l'architecture du dispositif de détection.

Alternativement, ou plus, au moins une électrode de garde peut former un plan de garde commun à plusieurs, en particulier à toutes, les électrodes de détection. Une telle architecture permet de simplifier encore plus le dispositif selon l'invention.

Alternativement, au moins une électrode de garde peut être commune à plusieurs, en particulier à toutes les, premières, respectivement deuxièmes, électrodes de mesure. Il est ainsi possible de garder les électrodes de mesure d'une voie de mesure, indépendamment de l'autre voie de mesure, ce qui permet une plus grande robustesse de détection redondante.

La ou les électrodes de mesure et/ou de garde peuvent être réalisées en tout matériau conducteur. Elles peuvent en particulier être réalisées avec un dépôt ou une couche métallique.

Alternativement, l'une au moins, en particulier chacune, des électrodes de mesure, peut être réalisée en un matériau transparent.

L'électrode de garde peut aussi être réalisée en un matériau transparent

Les pistes de liaison de l'une au moins, en particulier de chacune, des électrodes peuvent être également être transparentes.

Par exemple, la ou les électrodes peuvent être réalisée(s) réalisée en Oxyde d'Indium Etain (ou ITO).

Avantageusement, l'électronique de détection de chaque voie de détection peut comprendre un module de mesure fournissant un signal de détection relatif à une ou des capacités, dites électrode-objet, entre une ou des électrodes de mesure de ladite voie de détection et un ou des objets à proximité de, ou en contact avec, la ou lesdites électrodes de mesure.

Un tel module de mesure peut être numérique ou analogique et peut par exemple être agencé pour produire un signal de détection sous la forme d'une tension ou d'un signal numérique proportionnel, ou inversement proportionnel, à la capacité électrode-objet pour chaque, ou un groupe, d'électrode(s) de mesure d'une voie de mesure.

Chaque voie de détection peut en outre comprendre au moins un module de calcul configuré pour déterminer une distance ou une information de distance, et/ou un contact ou une information de contact, entre l'objet et la, ou les, électrode(s) mesure, en fonction de la mesure de capacité électrode-objet entre ladite électrode de mesure et l'objet.

Ce module de calcul peut par exemple comprendre ou être réalisé sous la forme d'un microcontrôleur, ou d'un FPGA.

Le calcul de la distance et/ou du contact peut être réalisé en prenant en compte le signal de détection, ou en fonction d'une version numérisée dudit signal de détection, ou d'un autre signal numérique ou analogique déduit dudit signal de détection, par exemple par filtrage dudit signal de détection à la fréquence de travail.

L'au moins un module de calcul peut déterminer ladite distance, ou ledit contact, par calcul ou par comparaison avec une table de référence préalablement établie.

L'au moins un module de calcul peut également déterminer ladite distance, ou ledit contact, directement en fonction d'une relation préalablement renseignée.

L'information de distance peut également être, ou comprendre, une information de comparaison par rapport à un ou une pluralité de seuils de distance. Elle peut alors être utilisée par exemple pour déclencher des procédures de sécurité, tel que par exemple un ralentissement, ou un arrêt, ou une procédure de contournement, d'une machine ou un robot lorsqu'un obstacle ou un opérateur humain se trouve à une distance inférieure à un seuil.

Le dispositif selon l'invention peut comprendre en outre un module de contrôle agencé pour comparer des signaux mesurés respectivement par la première électronique de détection et la seconde électronique de détection.

Ce module de contrôle peut être un module électronique et/ou numérique distinct des électroniques de détection.

Il peut être également réalisé par des composants ou des fonctionnalités (par exemple implémentées dans un microcontrôleur) d'une ou de chaque électronique de détection, qui compare des signaux de mesure issus de cette voie de détection avec ceux issus de l'autre voie de détection.

Ainsi, le module de contrôle peut être par exemple implémenté dans les modules de calcul des premières et secondes électroniques de détection, sous la forme de deux sous-modules de contrôle indépendants qui comparent des signaux de mesure issus de leur voie de détection respective avec ceux issus de l'autre voie de détection. Cet agencement permet une redondance et une sécurité de fonctionnement optimale puisque chaque voie de détection est surveillée par deux sous-modules de contrôle indépendants.

Le module de contrôle peut être agencé par exemple pour comparer les distances, ou les informations de distance, et/ou de contact, obtenues.

Le module de contrôle peut notamment déterminer des différences entre les signaux de mesure issus respectivement des voies de détection et ainsi détecter des défaillances du dispositif de détection capacitive. Il peut alors être utilisée par exemple pour déclencher des procédures de sécurité, tel que par exemple un ralentissement ou un arrêt, en cas de détection d'une différence entre signaux de mesure de voies de détection différentes supérieure à un seuil préétabli.

Avantageusement, au moins une, en particulier chacune, des première et deuxième voies de détection peut comprendre un moyen de scrutation pour interroger au moins une partie, ou chacune, des électrodes de mesure de ladite voie de détection séquentiellement.

Ainsi, l'architecture de l'électronique de détection est simplifiée pour la, ou chaque, voie de détection. Par exemple un module de mesure, et un module de calcul, peut être commun à plusieurs, voire toutes les électrodes de mesure d'une voie de mesure.

Un tel moyen de scrutation peut comprendre un switch reliant l'électronique de mesure d'une voie de mesure, séquentiellement ou à tour de rôle, à chaque électrode de mesure ou à chaque groupe d'électrodes de mesure de ladite voie de mesure.

Ce switch peut en outre être agencé de sorte à relier respectivement les électrodes de mesure, soit à l'électronique de mesure, soit au potentiel de garde. Ainsi, les électrodes de mesure qui ne sont pas reliées à l'électronique de mesure, et donc non mesurantes, se comportent comme des éléments de garde vis-à-vis des électrodes mesurantes.

De manière générale, pour chaque voie de détection, l'électronique de détection peut numérique, ou analogique, ou encore une combinaison de moyens numériques et analogique.

L'électronique de détection d'une voie de détection peut être identique, ou différente, de l'électronique de détection d'une autre voie de détection.

Suivant un exemple de réalisation, l'électronique de détection d'au moins une, en particulier de chaque, voie de détection peut comprendre un amplificateur opérationnel (AO) ou un circuit réalisant un amplificateur opérationnel, fonctionnant en amplificateur de transimpédance ou de charge, dont
- une première entrée, par exemple inverseuse, est reliée à une ou des électrodes de mesure de ladite voie de détection, directement ou par l'intermédiaire d'un moyen de scrutation ;
- une deuxième entrée, par exemple non inverseuse, est reliée à un oscillateur fournissant un signal d'excitation ;
- la sortie est rebouclée sur ladite première entrée par l'intermédiaire d'une impédance, et en particulier d'une capacité.

Dans cette configuration, la sortie de l'AO fournit une tension Vₛ dont l'amplitude est proportionnelle à la capacité électrode-objet entre ladite électrode de mesure et l'objet.

La sortie de l'amplificateur opérationnel peut être reliée, directement ou indirectement, à un module de mesure de la tension Vₛ, qui lui-même est relié à un ou plusieurs modules de calcul, tel que le ou les modules de calcul décrits plus haut.

Ce module de mesure de la tension Vₛ peut comprendre une démodulation, telle qu'une démodulation synchrone à une fréquence de travail du potentiel alternatif d'excitation, ou une détection d'amplitude.

Avantageusement, l'électronique de détection de chaque voie de détection peut être, au moins en partie, référencée électriquement au potentiel alternatif d'excitation.

Le dispositif selon l'invention peut en outre comprendre un oscillateur fournissant le potentiel alternatif d'excitation pour la première et la seconde voie de détection, et le potentiel de garde le cas échéant.

L'oscillateur peut être commun à toutes les voies de détection, et à l'au moins une électrode de garde.

Alternativement, chaque voie de détection peut comprendre un oscillateur individuel, pour une meilleure redondance. Dans ce cas, les oscillateurs des voies de détection sont préférentiellement synchronisés pour éviter qu'une voie de détection ne perturbe une autre voie de détection, et fournissent de préférence un potentiel alternatif de même fréquence et de même amplitude.

Suivant encore un autre aspect de l'invention, il est proposé une couche de détection, pour un équipement, munie d'un dispositif de détection selon l'invention.

Le dispositif de détection selon l'invention, en particulier les électrodes de détection, peu(ven)t être intégré(es) dans la couche de détection.

La couche de détection peut être intégrée dans l'équipement.

Alternativement, la couche de détection peut être indépendante de l'équipement et rapportée sur cet équipement, de manière amovible ou démontable.

Suivant un mode de réalisation, la couche de détection selon l'invention peut comprendre, selon une face, une pluralité d'électrodes de détection réparties selon une disposition matricielle, chacune desdites électrodes de détection comprenant au moins une première et une deuxième électrodes de mesure juxtaposées et/ou imbriquées.

Une telle disposition permet en particulier d'obtenir une résolution spatiale identique ou sensiblement identique pour la détection d'objets avec les deux voies de détection.

Suivant un autre mode de réalisation, la couche de détection selon l'invention peut comprendre :
- selon une face, au moins une électrode de détection, et
- selon une autre face, au moins une électrode de garde.

La couche de détection peut comprendre un matériau diélectrique souple, tel qu'un substrat de circuit imprimé, supportant selon l'une ou les deux faces des électrodes sous la forme de dépôts ou de couches métalliques.

La couche de détection peut bien entendu comprendre des couches de protection ou d'habillage sur les électrodes de mesure et/ou de garde.

La couche de détection peut se présenter sous la forme d'un élément d'habillage, rigide ou souple.

La couche de détection peut se présenter sous la forme d'un élément d'habillage ou d'une peau, ou d'un textile d'habillage.

La couche de détection peut aussi se présenter sous la forme d'une pièce ou d'un élément d'habillage de forme tubulaire, tel que par exemple une coque ou un capot.

Suivant un autre aspect de la même invention, il est proposé un équipement muni d'un dispositif de détection selon l'invention, ou d'une couche de détection selon l'invention.

L'équipement peut se présenter par exemple sous la forme d'un robot fixe ou mobile, de forme humanoïde ou autre, ou sous la forme d'un bras manipulateur robotisé, ou d'un bras de robot ou d'un segment de robot, ou encore d'un véhicule autonome (AGV).

Suivant des modes de réalisation, le dispositif de détection, respectivement la couche de détection, peut être intégré(e) dans un organe de l'équipement, tel qu'une coque ou un capot.

Alternativement, le dispositif de détection, respectivement la couche de détection, peut être indépendant d'un organe de l'équipement et être disposé dans/sur un organe dudit équipement de manière démontable ou amovible.

### Description des figures et modes de réalisation

D'autres avantages et caractéristiques apparaîtront à l'examen de la description détaillée d'exemples nullement limitatifs, et des dessins annexés sur lesquels :
- la FIGURE 1 est une représentation schématique d'un exemple de réalisation non limitatif d'une électronique de détection capacitive pouvant être mise en œuvre dans le dispositif selon l'invention ;
- la FIGURE 2 est une représentation schématique d'un exemple de réalisation non limitatif d'un dispositif de détection selon l'invention ;
- les FIGURES 3-7 sont des représentations schématiques d'exemples de réalisation non limitatifs d'une électrode de détection pouvant être utilisée dans un dispositif de détection selon l'invention ; et
- la FIGURE 8 est une représentation schématique d'un exemple de réalisation non limitatif d'un robot équipée d'un dispositif de détection selon l'invention

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

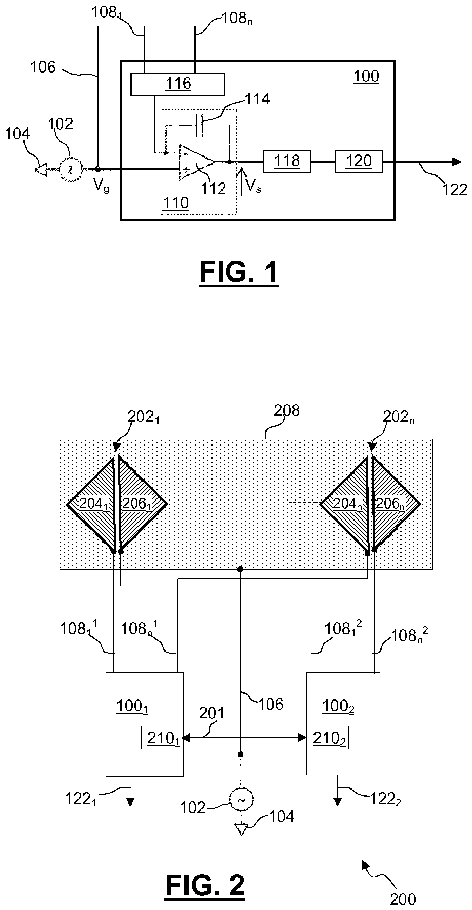

La FIGURE 1 est une représentation schématique d'un exemple de réalisation non limitatif d'une électronique de détection capacitive pouvant être mise en œuvre dans le dispositif selon l'invention.

L'électronique de détection 100, représentée sur la FIGURE 1, peut être réalisée sous une forme analogique ou numérique, ou une combinaison analogique/numérique.

L'électronique de détection 100 reçoit une tension alternative d'excitation, notée V_{G}, de la part d'un oscillateur 102, référencé à un potentiel de masse 104.

La tension V_{G} est utilisée comme potentiel de garde pour polariser la ou les électrodes de garde par l'intermédiaire d'une ligne ou plusieurs lignes 106, et comme potentiel d'excitation pour polariser « n » électrodes de mesure par l'intermédiaire de « n » lignes 108₁-108ₙ, avec n≥1.

L'électronique de détection 100 comprend un amplificateur de courant, ou de charge, 110 représenté par un amplificateur opérationnel (AO) 112 et une capacité de contre-réaction 114 rebouclant la sortie de l'AO 112 à l'entrée « - » de l'AO 112.

De plus, dans l'exemple représenté, l'entrée « + » de l'AO 112 reçoit la tension V_{G} et l'entrée « - » de l'AO 112 est prévue pour être reliée à chaque électrode de mesure par l'intermédiaire d'un moyen de scrutation 116, qui peut être par exemple un switch, de sorte à interroger individuellement à tour de rôle un ensemble de « n » électrodes de mesure. Les lignes 108₁-108ₙ sont toutes reliées au moyen de scrutation 116.

Dans ces conditions, l'amplificateur de charge 110, et en particulier l'AO 112, fournit en sortie une tension Vₛ d'amplitude proportionnelle à la capacité de couplage Cₑₒ, dite capacité électrode-objet, entre l'électrode de mesure reliée à son entrée « - » et un objet à proximité, ou en contact, de ladite électrode de mesure.

L'électronique de détection 100 peut en outre comprendre un conditionneur 118 permettant d'obtenir un signal représentatif de la capacité de couplage Cₑₒ recherchée. Ce conditionneur 118 peut comprendre, par exemple, un démodulateur synchrone pour démoduler le signal par rapport à une porteuse, à une fréquence de travail. Le conditionneur 118 peut également comprendre un démodulateur asynchrone ou un détecteur d'amplitude. Ce conditionneur 118 peut, bien entendu, être réalisé sous une forme analogique et/ou numérique (microprocesseur) et comprendre tous moyens nécessaires de filtrage, de conversion, de traitement, etc.

Le conditionneur 118 mesure et fournit la valeur de la tension V_{S}.

L'amplificateur de courant ou de charge 110 et le conditionneur 118 constituent ainsi un module de mesure qui fournit un signal relatif à la capacité de couplage Cₑₒ électrode-objet.

L'électronique de détection 100 comprend en outre un module de calcul 120 agencé pour déterminer une distance ou une information de distance, et/ou un contact ou une information de contact, entre l'électrode de mesure et l'objet, en fonction du signal relatif à la capacité de couplage Cₑₒ issu du conditionneur 118.

Ce module de calcul 120 peut par exemple comprendre ou être réalisé sous la forme d'un microcontrôleur, ou d'un FPGA.

Le module de calcul peut également fournir d'autres informations, telles que des déclenchements d'alarmes ou de procédures de sécurité, lorsque par exemple les distances mesurées sont inférieures à des seuils de distance prédéterminés.

Bien entendu, l'électronique de mesure 100 peut comprendre d'autres composants que ceux décrits.

L'électronique de détection 100, ou au moins sa partie sensible avec l'amplificateur de charge 110 peut être référencée (ou alimentée par des alimentations électriques référencées) au potentiel de garde V_{G}, pour minimiser les capacités parasites.

L'électronique de détection 100 peut également être référencée, de manière plus classique, au potentiel de masse 104.

L'électronique de détection fournit à une sortie 122 un signal relatif à la capacité Cₑₒ, ou à la distance entre l'objet et l'électrode de mesure.

La FIGURE 2 est une représentation schématique d'un exemple de réalisation non limitatif d'un dispositif de détection capacitive redondante selon l'invention.

Le dispositif de détection 200, représenté sur la FIGURE 2, comprend un ensemble de plusieurs électrodes de détection 202₁-202ₙ. Les électrodes de détection 202₁-202ₙ sont représentées selon une ligne par soucis de clarté. Bien entendu, les électrodes de détection 202₁-202ₙ peuvent être disposées sous la forme d'une matrice, par exemple d'électrodes de détection 202₁-202ₙ de forme carrée ou en losange, ou selon toute autre configuration que celle représentée sur la FIGURE 2.

Les électrodes de détection 202₁-202ₙ sont associées chacune à un emplacement, ou un pixel, de détection sur une surface de détection.

Chaque électrode de détection 202ᵢ est formée par deux électrodes de mesure : une première électrode de mesure 204ᵢ et une deuxième électrode de mesure 206ᵢ. Les deux électrodes de mesure 204ᵢ et 206ᵢ, formant une électrode de détection 202ᵢ, sont indépendantes l'une de l'autre, et sont utilisées pour réaliser une double détection à un même emplacement/pixel de détection, à savoir l'emplacement associé à l'électrode de détection 206ᵢ. Pour ce faire, un signal relatif à la capacité électrode-objet est mesuré indépendamment pour chaque électrode de mesure 204ᵢ et 206ᵢ, par exemple selon le principe décrit en référence à la FIGURE 1.

Le dispositif de détection 200 comprend en outre une première électronique de détection 100₁ associée à toutes les premières électrodes de mesure 204₁-204ₙ de toutes les électrodes de détection 202₁-202ₙ.

La première électronique de détection 100₁ forme avec les premières électrodes de mesure 204₁-204ₙ une première voie de détection.

La première électronique de détection 100₁ peut être identique à, ou fonctionner sur le principe que, l'électronique de détection 100 de la FIGURE 1.

La première électronique de détection 100₁ est reliée à toutes les premières électrodes de mesure 204₁-204ₙ grâce à aux lignes 108₁¹-108¹n. La première électronique de mesure fournit sur sa sortie 122₁ un signal de détection relatif à la capacité électrode-objet Cₑₒ, ou à la distance électrode-objet, pour chacune des premières électrodes de mesure 204₁-204ₙ.

Le dispositif de détection 200 comprend en outre une deuxième électronique de détection 100₂, associée à toutes les deuxièmes électrodes de mesure 206₁-206ₙ de toutes les électrodes de détection 202₁-202ₙ.

La deuxième électronique de détection 100₂ forme avec les deuxièmes électrodes de mesure 206₁-206ₙ une deuxième voie de détection, indépendante de la première voie de détection.

La deuxième électronique de détection 100₂ peut être identique à, ou fonctionner sur le principe que, l'électronique de détection 100 de la FIGURE 1.

La deuxième électronique de détection 100₂ est reliée à toutes les deuxièmes électrodes de mesure 206₁-206ₙ grâce à aux lignes 108₁²-108²ₙ. La deuxième électronique de mesure fournit sur sa sortie 122₂ un signal de détection relatif à la capacité électrode-objet Cₑₒ, ou à la distance électrode-objet, pour chacune des deuxièmes électrodes de mesure 206₁-206ₙ.

Ainsi, chacune des premières et deuxièmes voies de détection fournissent une mesure, et une détection, indépendante pour chaque emplacement de détection. Par conséquent, le dispositif 200 assure une détection capacitive redondante pour chaque emplacement de détection.

Le dispositif de détection 200 comprend en outre un dispositif de contrôle 210 dont une des fonctions est de vérifier le bon fonctionnement de l'ensemble et de détecter des défaillances de l'une ou de l'autre voie de détection.

Dans le mode de réalisation présenté, ce module de contrôle 210 comprend deux sous-modules de contrôle 210₁ et 210₂, implémentés respectivement dans les modules de calcul 120 des premières et secondes voies de détection. Les sous-modules de contrôle 210₁, 210₂ sont agencés pour comparer des signaux de mesure issus de leur voie de détection respective avec ceux issus de l'autre voie de détection.

Le module de contrôle 210 peut ainsi déterminer des différences entre les signaux de mesure issus respectivement de la première et de la seconde voie de détection, qui sont révélatrices de défaillances d'au moins une des voies de détection. En cas de différence de mesure entre les voies supérieure à un seuil préétabli, le module de contrôle 210 peut déclencher des procédures de sécurité, tel que par exemple un ralentissement ou un arrêt du système. Ce déclanchement peut être effectué par l'intermédiaire des modules de calcul 120, ou par des sorties propres au module de contrôle. Il est à noter qu'une procédure de sécurité peut ainsi être déclenchée dès qu'une différence est détectée entre les voies, sans chercher à déterminer laquelle des voies est défaillante.

Suivant un aspect avantageux de l'invention, les voies de détection peuvent être utilisée simultanément, de manière synchrone ou asynchrone, car elles ne se perturbent pas. En particulier, une utilisation synchrone permet d'obtenir deux mesures simultanément dans des conditions identiques et donc de détecter plus rapidement et plus efficacement les défaillances.

Bien entendu, les voies de mesure peuvent également être utilisées séquentiellement ou à tour de rôle. Dans ce dernier cas, une ligne de communication peut être prévue entre les voies de détection pour assurer une détection à tour de rôle.

Le dispositif 200 comprend également une électrode de garde 208, formant un plan de garde commun pour l'ensemble des électrodes de détection 202₁-202ₙ, et donc pour l'ensemble des premières et deuxièmes électrodes de mesure.

L'électrode de garde 208 est polarisée au potentiel de garde V_{G}, par exemple par l'intermédiaire de la ligne 106, comme décrit en référence à la FIGURE 1.

Alternativement, le dispositif de détection selon l'invention peut mettre en œuvre une électrode de garde :
- individuelle pour chaque électrode de mesure au sein d'une électrode de détection, ou
- commune aux électrodes de mesure d'une même électrode de détection ; ou
- commune à plusieurs, ou à l'ensemble, des premières électrodes de mesure, ou encore
- commune à plusieurs, ou à l'ensemble, des deuxièmes électrodes de mesure.

Sur la FIGURE 2, de manière nullement limitative, chaque électrode de détection 202ᵢ est formée par deux électrodes de mesure.

Bien entendu, suivant une formulation générale, chaque électrode de détection 202ᵢ peut être formée par « k » électrodes de mesure, avec k≥2. Dans ce cas, le dispositif de détection capacitive redondante selon l'invention peut comprendre « k » électroniques de détection indépendantes 100₁-100ₖ, chacune associée l'une des électrodes de mesure de chaque électrode de détection 202ᵢ.

De plus, sur la FIGURE 2, chaque électrode de détection 202ᵢ est formée par deux électrodes de mesure juxtaposées, en forme de triangle. Bien entendu, la forme et la disposition des électrodes de mesure d'une électrode de détection ne sont pas limitées à cet exemple.

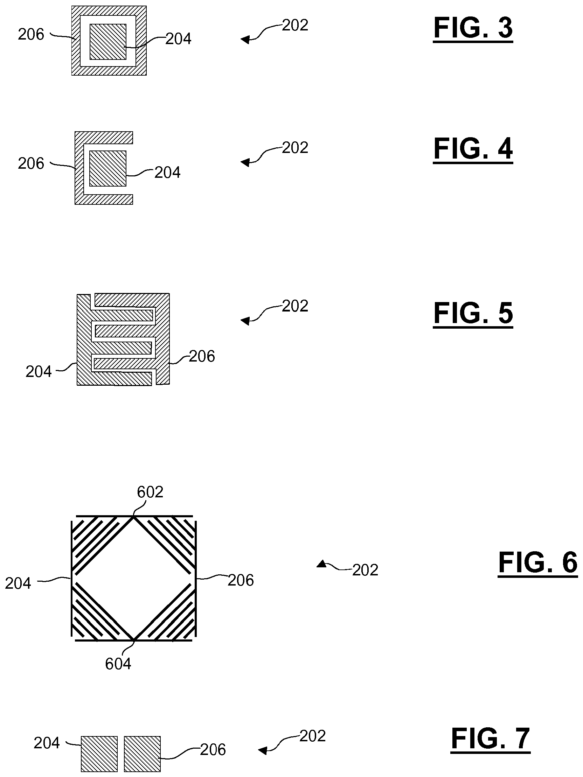

La FIGURE 3 donne un exemple de réalisation d'une électrode de détection pouvant être mise en œuvre dans un dispositif de détection capacitive redondante selon l'invention.

Dans l'exemple décrit sur la FIGURE 3, l'électrode détection 202 est formée par une première électrode de mesure 204, imbriquée entièrement dans une deuxième électrode de mesure 206. La deuxième électrode de mesure 206 entoure totalement la première électrode de mesure 204. Les pistes de connexion peuvent alors être réalisées sur une autre couche de conducteur.

La FIGURE 4 donne un exemple de réalisation d'une électrode de détection pouvant être mise en œuvre dans un dispositif de détection capacitive redondante selon l'invention.

Dans l'exemple décrit sur la FIGURE 4, l'électrode détection 202 est formée par une première électrode de mesure 204, imbriquée entièrement dans une deuxième électrode de mesure 206. La deuxième électrode de mesure 206 n'entoure pas totalement la première électrode de mesure, et se présente sous la forme d'un « C ».

La FIGURE 5 donne un exemple de réalisation d'une électrode de détection pouvant être mise en œuvre dans un dispositif de détection capacitive redondante selon l'invention.

Dans l'exemple décrit sur la FIGURE 5, l'électrode détection 202 est formée par une première électrode de mesure 204 et une deuxième électrode de mesure 206 qui sont imbriquées l'une dans l'autre. Chaque électrode de mesure se présente sous la forme d'un peigne. Les peignes sont alors imbriqués l'un dans l'autre.

La FIGURE 6 donne un exemple de réalisation d'une électrode de détection pouvant être mise en œuvre dans un dispositif de détection capacitive redondante selon l'invention.

Dans l'exemple décrit sur la FIGURE 6, l'électrode détection 202 est formée par quatre électrodes de mesure 204, 206, 602 et 604 qui sont imbriquées les unes dans les autres trois à trois. Les électrodes de mesure 204 et 206 sont identiques et se font face. Les électrodes de mesure 602 et 604 sont identiques et se font face.

Chaque électrode de mesure est imbriquée dans les deux électrodes de mesure qui lui sont juxtaposées.

La FIGURE 7 donne un exemple de réalisation d'une électrode de détection pouvant être mise en œuvre dans un dispositif de détection capacitive redondante selon l'invention.

Dans l'exemple décrit sur la FIGURE 7, l'électrode détection 202 est formée par une première électrode de mesure 204, juxtaposée avec une deuxième électrode de mesure 206.

Comme précédemment, les exemples d'électrodes de détection décrits aux FIGURE 3 à FIGURE 7 peuvent être agencés pour couvrir une surface de détection selon des dispositions matricielles, radiales, ...

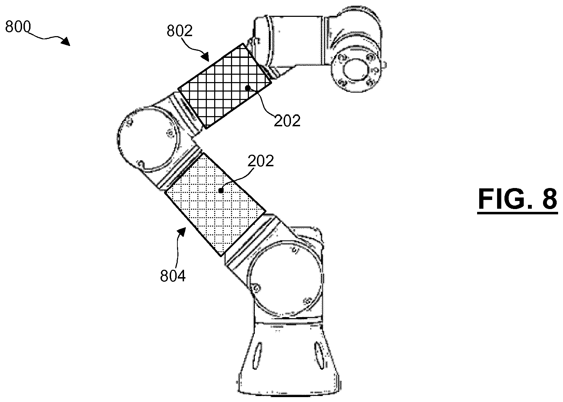

La FIGURE 8 est une représentation schématique d'un robot équipé d'éléments d'habillage selon l'invention.

Le robot 800, représenté sur la FIGURE 8, est un bras robotisé comprenant plusieurs segments articulés, et reliés entre eux par des articulations rotatives.

Le robot 800 comporte deux éléments d'habillage 802 et 804 disposés sur deux segments du robot 800.

Chaque élément d'habillage 802-804 comprend un dispositif de détection selon l'invention, tel que par exemple le dispositif de détection 200 de la FIGURE 2.

Les électroniques de détection des dispositifs de détection équipant les éléments d'habillage 802 et 804 peuvent être distinctes, ou en partie ou en totalité, communes.

Les électrodes de détection 202 de chaque dispositif de détection équipant les éléments d'habillage 802-804 sont intégrées dans l'épaisseur dudit élément d'habillage, ou déposée sur une ou les faces dudit élément d'habillage 802-804.

Les éléments d'habillage 802-804 comprennent également une couche de garde pour éviter les couplages parasites entre les électrodes et la structure du robot.

Les éléments d'habillage 802-804 sont utilisés soit à la place d'un élément d'habillage originel du robot, soit en plus d'un élément d'habillage originel.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif (200) de détection capacitive d'un objet comprenant un ensemble d'électrodes de détection capacitives (202₁-202ₙ), chacune réalisant une détection capacitive pour un emplacement de détection d'une surface de détection, chaque électrode de détection (202₁-202ₙ) comprenant au moins une première (204₁-204ₙ) et une deuxième (206₁-206ₙ) électrodes, dites de mesure, indépendantes, ledit dispositif (200) comprenant en outre :
- une première électronique de détection (100₁) pour les premières électrodes de mesure (204₁-204ₙ) dudit ensemble, formant avec lesdites premières électrodes de mesure (204₁-204ₙ) une première voie de détection, pour polariser lesdites premières électrodes de mesure (204₁-204ₙ) à un potentiel alternatif, dit d'excitation, différent d'un potentiel de masse (104), et mesurer un signal relatif à une capacité, dite électrode-objet, entre chaque première électrode de mesure (204₁-204ₙ) et ledit objet, et
- une deuxième électronique de détection (100₂) pour les deuxièmes électrodes de mesure (206₁-206ₙ) dudit ensemble, formant avec lesdites deuxièmes électrodes de mesure (206₁-206ₙ) une deuxième voie de détection, pour polariser lesdites deuxièmes électrodes de mesure (206₁-206ₙ) audit potentiel d'excitation et mesurer un signal relatif à une capacité électrode-objet entre chaque deuxième électrode de mesure (206₁-206ₙ) et ledit objet.

2. Dispositif (200) selon la revendication précédente, **caractérisé en ce que**, pour au moins une électrode de détection, les premières (204₁-204ₙ) et deuxièmes (206₁-206ₙ) électrodes de mesure sont juxtaposées de manière non imbriquée.

3. Dispositif (200) selon l'une quelconque des revendications précédentes, **caractérisé en ce que**, pour au moins une électrode de détection (202₁-202ₙ) :
- l'une des première (204₁-204ₙ) et deuxième (206₁-206ₙ) électrodes de mesure est au moins partiellement imbriquée dans l'autre desdites électrodes de mesure ; ou
- les première (204₁-204ₙ) et deuxième (206₁-206ₙ) électrodes de mesure sont au moins partiellement imbriquées l'une dans l'autre.

4. Dispositif (200) selon l'une quelconque des revendications précédentes, **caractérisé en ce qu'**il comprend en outre au moins une électrode de garde (208) pour au moins une première (204₁-204ₙ), respectivement deuxième (206₁-206ₙ), électrode de mesure, polarisée à un potentiel de garde alternatif, identique ou sensiblement identique au potentiel d'excitation à au moins une fréquence de travail.

5. Dispositif (200) selon la revendication 4, **caractérisé en ce qu'**au moins une électrode de garde (208) :
- est commune à toutes les électrodes de mesure (204₁-204ₙ, 206₁-206ₙ) formant une électrode de détection (202₁-202ₙ) ; et/ou
- est commune à plusieurs premières (204₁-204ₙ), respectivement deuxièmes (206₁-206ₙ), électrodes de mesure, et/ou
- forme un plan de garde commun à plusieurs, en particulier toutes, les électrodes de détection (202₁-202ₙ).

6. Dispositif (200) selon l'une quelconque des revendications précédentes, **caractérisé en ce que** l'électronique de détection (100₁,100₂) de chaque voie de détection comprend un module (110,118) de mesure fournissant un signal de détection relatif à une ou des capacités, dites électrode-objet, entre une ou des électrodes de mesure (204₁-204ₙ, 206₁-206ₙ) de ladite voie de détection (100₁,100₂) et un ou des objets à proximité de, ou en contact avec, la ou lesdites électrodes de mesure (204₁-204ₙ, 206₁-206ₙ).

7. Dispositif (200) selon l'une quelconque des revendications précédente, **caractérisé en ce qu'**il comprend en outre un module de contrôle (210) agencé pour comparer des signaux mesurés respectivement par la première électronique de détection (100₁) et la seconde électronique de détection (100₂).

8. Dispositif (200) selon l'une quelconque des revendications précédentes, **caractérisé en ce que** au moins une desdites première et deuxième voies de détection comprend un moyen de scrutation (116) pour interroger au moins une partie des électrodes de mesure (204₁-204ₙ, 206₁-206ₙ) de ladite voie de détection séquentiellement.

9. Dispositif (200) selon l'une quelconque des revendications précédentes, **caractérisé en ce que** l'électronique de détection (100₁,100₂) de chaque voie de détection est au moins en partie référencée électriquement au potentiel alternatif d'excitation.

10. Dispositif (200) selon l'une quelconque des revendications précédentes, **caractérisé en ce qu'**il comprend un oscillateur (102) fournissant le potentiel alternatif d'excitation pour la première et la seconde voie de détection, et le potentiel de garde (V_{G}) le cas échéant.

11. Couche de détection (802,804), pour un équipement (800), munie d'un dispositif de détection (200) selon l'une quelconque des revendications précédentes.

12. Couche de détection (802,804) selon la revendication 11, **caractérisée en ce qu'**elle comprend, selon une face, une pluralité d'électrodes de détection (202₁-202ₙ) réparties selon une disposition matricielle, chacune desdites électrodes de détection (202₁-202ₙ) comprenant au moins une première (204₁-204ₙ) et une deuxième (206₁-206ₙ) électrodes de mesure juxtaposées et/ou imbriquées.

13. Couche de détection (802,804) selon la revendication 11 ou 12, **caractérisé en ce que** qu'elle comprend, selon une face, au moins une électrode de détection (202₁-202ₙ), et selon une autre face, au moins une électrode de garde (208).

14. Couche de détection (802,804) selon l'une des revendications 11 à 13, **caractérisé en ce qu'**elle se présente sous la forme d'un élément d'habillage, rigide ou souple.

15. Equipement (800) muni d'un dispositif de détection (200) selon l'une quelconque des revendications 1 à 10, ou d'une couche de détection (802,804) selon l'une quelconque des revendications 11 à 14.

16. Equipement (800) selon la revendication précédente, caractérisé qu'il s'agit d'un robot, d'un bras manipulateur robotisé ou d'un segment de robot.

## Patentansprüche

1. Vorrichtung (200) zur kapazitiven Detektion eines Objekts, umfassend eine Anordnung von kapazitiven Detektionselektroden (202₁-202ₙ), die jeweils eine kapazitive Detektion für einen Detektionsort einer Detektionsfläche durchführen, wobei jede Detektionselektrode (202₁-202ₙ) mindestens eine erste (204₁-204ₙ) und eine zweite (206₁-206ₙ) Elektrode, die als unabhängige Messelektroden bezeichnet werden, umfasst, wobei die genannte Vorrichtung (200) ferner umfasst:
- eine erste Detektionselektronik (100₁) für die ersten Messelektroden (204₁-204ₙ) der genannten Anordnung, die mit den genannten ersten Messelektroden (204₁-204ₙ) einen ersten Detektionsweg bildet, um die genannten ersten Messelektroden (204₁-204ₙ) auf ein Wechselpotential vorzuspannen, das als Anregungspotential bezeichnet wird, und das von einem Massepotential (104) verschieden ist, und um ein Signal zu messen, das sich auf eine Kapazität, die als Elektrode-Objekt bezeichnet wird, zwischen jeder ersten Messelektrode (204₁-204ₙ) und dem genannten Objekt bezieht, und
- eine zweite Detektionselektronik (100₂) für die zweiten Messelektroden (206₁-206ₙ) der genannten Anordnung, die mit den genannten zweiten Messelektroden (206₁-206ₙ) einen zweiten Detektionsweg bildet, um die genannten zweiten Messelektroden (206₁-206ₙ) auf das genannte Anregungspotential vorzuspannen, und um ein Signal zu messen, das sich auf eine Elektrode-Objekt-Kapazität zwischen jeder zweiten Messelektrode (206₁-206ₙ) und dem genannten Objekt bezieht.

2. Vorrichtung (200) nach dem vorhergehenden Anspruch, **dadurch gekennzeichnet, dass**, für mindestens eine Detektionselektrode, die ersten (204₁-204ₙ) und zweiten (206₁-206ₙ) Messelektroden in nicht verschachtelter Weise nebeneinander angeordnet sind.

3. Vorrichtung (200) nach einem der vorhergehenden Ansprüche, **dadurch gekennzeichnet, dass**, für mindestens eine Detektionselektrode (202₁-202ₙ):
- eine der ersten (204₁-204ₙ) und zweiten (206₁-206ₙ) Messelektroden mindestens teilweise in die andere der genannten Messelektroden eingebettet ist; oder
- die ersten (204₁-204ₙ) und zweiten (206₁-206ₙ) Messelektroden mindestens teilweise ineinander verschachtelt sind.

4. Vorrichtung (200) nach einem der vorhergehenden Ansprüche, **dadurch gekennzeichnet, dass** sie ferner mindestens eine Schutzelektrode (208) für mindestens eine erste (204₁-204ₙ) bzw. zweite (206₁-206ₙ) Messelektrode umfasst, die auf ein Wechselschutzpotential vorgespannt ist, das identisch oder im Wesentlichen identisch mit dem Anregungspotential bei mindestens einer Arbeitsfrequenz ist.

5. Vorrichtung (200) nach Anspruch 4, **dadurch gekennzeichnet, dass** mindestens eine Schutzelektrode (208):
- für alle Messelektroden (204₁-204ₙ, 206₁-206ₙ) gemeinsam ist, die eine Detektionselektrode (202₁-202ₙ) bilden; und/oder
- für mehrere erste (204₁-204ₙ) bzw. zweite (206₁-206ₙ) Messelektroden gemeinsam ist, und/oder
- eine Schutzebene bildet, die für mehrere, insbesondere alle, Detektionselektroden (202₁-202ₙ) gemeinsam ist.

6. Vorrichtung (200) nach einem der vorhergehenden Ansprüche, **dadurch gekennzeichnet, dass** die Detektionselektronik (100₁, 100₂) jedes Detektionswegs ein Messmodul (110, 118) umfasst, das ein Detektionssignal in Bezug auf eine oder mehrere Kapazitäten, die als Elektrode-Objekt bezeichnet werden, zwischen einer oder mehreren Messelektroden (204₁-204ₙ, 206₁-206ₙ) des genannten Detektionswegs (100₁, 100₂) und einem oder mehreren Objekten in der Nähe, oder in Kontakt mit, der genannten oder den genannten mehreren Messelektroden (204₁-204ₙ, 206₁-206ₙ) liefert.

7. Vorrichtung (200) nach einem der vorhergehenden Ansprüche, **dadurch gekennzeichnet, dass** sie ferner ein Steuermodul (210) umfasst, das dafür eingerichtet ist, um Signale zu vergleichen, die jeweils von der ersten Detektionselektronik (100₁) und der zweiten Detektionselektronik (100₂) gemessen werden.

8. Vorrichtung (200) nach einem der vorhergehenden Ansprüche, **dadurch gekennzeichnet, dass** mindestens einer von dem genannten ersten und zweiten Detektionsweg ein Abtastmittel (116) zum sequentiellen Abfragen mindestens eines Teils der Messelektroden (204₁-204ₙ, 206₁-206ₙ) des genannten Detektionswegs umfasst.

9. Vorrichtung (200) nach einem der vorhergehenden Ansprüche, **dadurch gekennzeichnet, dass** die Detektionselektronik (100₁, 100₂) jedes Detektionswegs mindestens teilweise elektrisch auf das Wechselanregungspotential bezogen ist.

10. Vorrichtung (200) nach einem der vorhergehenden Ansprüche, **dadurch gekennzeichnet, dass** sie einen Oszillator (102) umfasst, der das Wechselanregungspotential für den ersten und den zweiten Detektionsweg und gegebenenfalls das Schutzpotential (V_{G}) liefert.

11. Detektionsschicht (802, 804), für eine Ausrüstung (800), welche mit einer Detektionsvorrichtung (200) nach einem der vorhergehenden Ansprüche versehen ist.

12. Detektionsschicht (802, 804) nach Anspruch 11, **dadurch gekennzeichnet, dass** sie auf einer Fläche eine Vielzahl von Detektionselektroden (202₁-202ₙ) umfasst, die gemäß einer Matrixanordnung verteilt sind, wobei jede der genannten Detektionselektroden (202₁-202ₙ) mindestens eine erste (204₁-204ₙ) und eine zweite (206₁-206ₙ) Messelektrode umfasst, die nebeneinander angeordnet und/oder verschachtelt sind.

13. Detektionsschicht (802, 804) nach Anspruch 11 oder 12, **dadurch gekennzeichnet, dass** sie auf einer Fläche mindestens eine Detektionselektrode (202₁-202ₙ) und auf einer anderen Fläche mindestens eine Schutzelektrode (208) umfasst.

14. Detektionsschicht (802, 804) nach einem der Ansprüche 11 bis 13, **dadurch gekennzeichnet, dass** sie als starres oder nachgiebiges Abdeckelement ausgebildet ist.

15. Ausrüstung (800), welche mit einer Detektionsvorrichtung (200) nach einem der Ansprüche 1 bis 10 oder mit einer Detektionsschicht (802, 804) nach einem der Ansprüche 11 bis 14 versehen ist.

16. Ausrüstung (800) nach dem vorhergehenden Anspruch, **dadurch gekennzeichnet, dass** es sich um einen Roboter, einen Robotermanipulatorarm oder ein Robotersegment handelt.

## Claims

1. Device (200) for capacitive detection of an object comprising a set of capacitive detection electrodes (202₁-202ₙ), each carrying out a capacitive detection for a detection location of a detection surface, each detection electrode (202₁-202ₙ) comprising at least one first (204₁-204ₙ) and one second (206₁-206ₙ) independent electrodes, called measurement electrodes, said device (200) also comprising:
- first detection electronics (100₁) for the first measurement electrodes (204₁-204ₙ) of said assembly, forming with said first measurement electrodes (204₁-204ₙ) a first detection channel, to polarize said first measurement electrodes (204₁-204ₙ) at an alternating potential, called excitation potential, different from a ground potential (104), and measure a signal relative to a capacitance, called electrode-object capacitance, between each first measurement electrode (204₁-204ₙ) and said object, and
- second detection electronics (100₂) for the second measurement electrodes (206₁-206ₙ) of said assembly, forming with said second measurement electrodes (206₁-206ₙ) a second detection channel, to polarize said second measurement electrodes (206₁-206ₙ) at said excitation potential and measure a signal relative to an electrode-object capacitance between each second measurement electrode (206₁-206ₙ) and said object.

2. Device (200) according to the preceding claim, **characterized in that**, for at least one detection electrode, the first (204₁-204ₙ) and second (206₁-206ₙ) measurement electrodes are juxtaposed in a non-interleaved manner.

3. Device (200) according to any one of the preceding claims, **characterized in that**, for at least one detection electrode (202₁-202ₙ):
- one of the first (204₁-204ₙ) and second (206₁-206ₙ) measurement electrodes is at least partially interleaved with the other of said measurement electrodes; or
- the first (204₁-204ₙ) and second (206₁-206ₙ) measurement electrodes are at least partially interleaved with one another.

4. Device (200) according to any one of the preceding claims, **characterized in that** it also comprises at least one guard electrode (208) for at least a first (204₁-204ₙ), respectively second (206₁-206ₙ), measurement electrode, polarized at an alternating guard potential identical or substantially identical to the excitation potential at at least one working frequency.

5. Device (200) according to claim 4, **characterized in that** at least one guard electrode (208):
- is common to all the measurement electrodes (204₁-204ₙ, 206₁-206ₙ) forming a detection electrode (202₁-202ₙ); and/or
- is common to several first (204₁-204ₙ), respectively second (206₁-206ₙ), measurement electrodes, and/or
- forms a guard plane common to several, in particular all, the detection electrodes (202₁-202ₙ).

6. Device (200) according to any one of the preceding claims, **characterized in that** the detection electronics (100₁,100₂) of each detection channel comprises a measurement module (110,118) supplying a detection signal relative to one or more capacitances, called electrode-object capacitances, between one or more measurement electrodes (204₁-204ₙ, 206₁-206ₙ) of said detection channel (100₁,100₂) and one or more objects in proximity to, or in contact with, said measurement electrode or electrodes (204₁-204ₙ, 206₁-206ₙ).

7. Device (200) according to any one of the preceding claims, **characterized in that** it also comprises a control module (210) arranged to compare signals measured respectively by the first detection electronics (100₁) and the second detection electronics (100₂).

8. Device (200) according to any one of the preceding claims, **characterized in that** at least one of said first and second detection channels comprises a polling means (116) to poll at least a part of the measurement electrodes (204₁-204ₙ, 206₁-206ₙ) of said detection channel sequentially.

9. Device (200) according to any one of the preceding claims, **characterized in that** the detection electronics (100₁,100₂) of each detection channel is at least partially electrically referenced to the alternating excitation potential.

10. Device (200) according to any one of the preceding claims, **characterized in that** it comprises an oscillator (102) supplying the alternating excitation potential for the first and second detection channel, and the guard potential (VG) if required.

11. Detection layer (802,804), for an item of equipment (800), fitted with a detection device (200) according to any one of the preceding claims.

12. Detection layer (802,804) according to claim 11, **characterized in that** it comprises, along a face, a plurality of detection electrodes (202₁-202ₙ) distributed according to a matrix arrangement, each of said detection electrodes (202₁-202ₙ) comprising at least a first (204₁-204ₙ) and a second (206₁-206ₙ) measurement electrodes juxtaposed and/or interleaved.

13. Detection layer (802,804) according to claim 11 or 12, **characterized in that** it comprises, along a face, at least one detection electrode (202₁-202ₙ), and along another face, at least one guard electrode (208).

14. Detection layer (802,804) according to one of claims 11 to 13, **characterized in that** it has the form of a rigid or resilient trim element.

15. Item of equipment (800) fitted with a detection device (200) according to any one of claims 1 to 10, or a detection layer (802,804) according to any one of claims 11 to 14.

16. Item of equipment (800) according to the preceding claim, **characterized in that** it is a robot, a robotized handling arm or a robot segment.
